# EUROPEAN PATENT APPLICATION

(11) **EP 2 067 608 A1**
(43) Date of publication of application: **10.06.2009**
(21) Application number: 08019867.4
(22) Date of filing: 13.11.2008
(51) Int. Cl.: B29C 67/00

(54) **Optical shaping apparatus and optical shaping method**

(30) Priority: 03.12.2007 JP 2007312028
(71) Applicant: Sony Corporation, Tokyo 108-0075 (JP)
(72) Inventor: Kihara, Nobuhiro, Tokyo (JP); Kuzusako, Junuchi, Tokyo (JP); Honda, Katsuhisa, Tokyo (JP)
(74) Representative: Müller - Hoffmann & Partner

(57) **Abstract**

An optical shaping apparatus includes a light source configured to irradiate light on the surface of a light hardening resin, and a spatial light modulating unit configured to subject light irradiated from the light source to spatial modulation, and irradiate the light on an irradiation area which is an area where a hardening layer is formed. Subsequently, the spatial light modulating unit divides the irradiation area into multiple sections in a zigzag form or tree-ring form, and subjects the light from the light source to spatial modulation to irradiate the light on the irradiation area for each of the sections by multiple number of times. The present invention can be applied to, for example, an optical shaping apparatus.

## Description

### CROSS REFERENCES TO RELATED APPLICATIONS

The present invention contains subject matter related to Japanese Patent Application JP 2007-312028 filed in the Japanese Patent Office on December 3, 2007, the entire contents of which are incorporated herein by reference.

### BACKGROUND OF THE INVENTION

### 1. Field of the Invention

The present invention relates to an optical shaping apparatus and optical shaping method, and particularly, relates to an optical shaping apparatus and optical shaping method whereby high-precision optical shaping can be performed.

### 2. Description of the Related Art

Heretofore, when employing three-dimensional shape data created with CAD (Computer Aided Design) to create a three-dimensional model, for example, a machining device or the like which is numerically-controlled is employed to create a three-dimensional model by machining.

Also, in recent years, a technique called rapid prototyping (RP) for creating a three-dimensional model without performing machining has caught attention in a great number of manufacturing fields. With rapid prototyping, a manufacturing technique called a layering shaping method is employed wherein cross-sectional shaped thin plates are created by a three-dimensional model being sliced based on the three-dimensional shape data of the three-dimensional model, and the cross-sectional shaped thin plates thereof are layered, thereby creating a three-dimensional model.

Also, according to this technique for creating cross-sectional shaped thin plates, rapid prototyping is classified into optical shaping employing an ultraviolet hardening resin, a method for extrusion-layering thermoplastic resins (FDM), a powder melt adhesion layering method (SLS), a paper thin-film layering method (LOM), a method for discharge-layering powder or hardening catalyst (Ink-Jet method), and so forth.

For example, with optical shaping, the three-dimensional shape data of a three-dimensional model created by CAD is transformed into STL (Stereo Lithography) which is a format wherein the surface of the three-dimensional model is expressed with a small triangle face, and is input to an optical shaping apparatus.

The optical shaping apparatus generates cross-sectional shape data wherein the three-dimensional model is sliced with a certain interval of, for example, around 0.1 through 0.2 mm, from the three-dimensional shape data, and determines an irradiation area of light to be irradiated on the surface of a liquid light hardening resin according to the generated cross-sectional shape data. The optical shaping apparatus irradiates light of the irradiation area corresponding to the cross-sectional shape data thereof on the surface of the liquid light hardening resin for each layer of the cross-sectional shape data, and moves a moving trestle within the liquid light hardening resin downward in the vertical direction according to the thickness of the slices of the three-dimensional model. Subsequently, the optical shaping apparatus repeats irradiation of light and movement of the moving trestle from the lowermost layer to the uppermost layer of the cross-sectional shape data, thereby generating a three-dimensional model.

With the optical shaping apparatus, examples of a method for irradiating light on the surface of the light hardening resin include a beam scanning method for scanning an optical beam, an SLM projecting method for employing a spatial light modulator (SLM) to irradiate light collectively, and a method for combining the beam scanning method and SLM projecting method.

For example, with the SLM projecting method, a liquid crystal panel is employed as a spatial light modulator, each pixel of the liquid crystal panel modulates the light from the light source based on cross-sectional shape data, and light of the irradiation area corresponding to the cross-sectional shape data is irradiated on the surface of a light hardening resin.

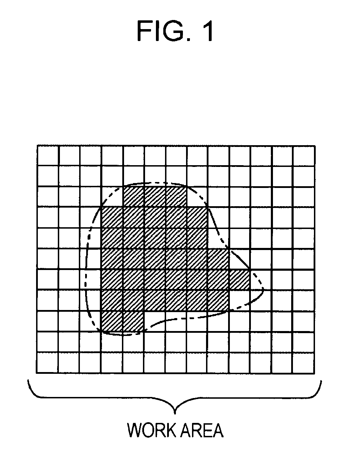

One-shot exposure according to the SLM projecting method will be described with reference to Fig. 1. Fig. 1 illustrates a predetermined area (hereafter, referred to as "work area" as appropriate) of the surface of an ultraviolet hardening resin which can be subjected to exposure collectively by a spatial light modulator. The work area is divided in a grating form by the unit area corresponding to each pixel of the spatial light modulator, and irradiation of light is turned on/off for each unit area.

Also, in Fig. 1, the profile line based on cross-sectional shape data is illustrated with a two-dot broken line, and unit areas subjected to hatching in the inner side than the profile line thereof become an irradiation area. Thus, light is irradiated on the irradiation area corresponding to the cross-sectional shape data, and accordingly, the light hardening resin of the irradiation area is hardened, thereby forming a hardening layer.

In general, when light is irradiated and hardened, the light hardening resin is contracted, for example, with a contracting ratio of around 7%. Accordingly, upon light being irradiated on the irradiation area of the light hardening resin at a time, the light hardening resin is hardened while being contracted toward the center of the irradiation area as a whole. Occurrence of such contraction leads to occurrence of distortion or deformation of the hardening layer.

Now, with Japanese Unexamined Patent Application Publication No. 6-95257, an image recording apparatus has been disclosed, which employs a spatial light modulator to modulate ultraviolet rays according to image data, and records an image on a photosensitive resin by the ultraviolet rays thereof.

### SUMMARY OF THE INVENTION

As described above, upon distortion or deformation occurring on the hardening layer due to contraction of the light hardening resin, the dimensional precision of a three-dimensional model formed by the hardening layer being layered deteriorates, and accordingly, it has been difficult to perform high-precision optical shaping.

There has been recognized demand for enabling high-precision optical shaping to be performed.

With an optical shaping apparatus according to an embodiment of the present invention, an optical shaping apparatus configured to irradiate light according to the cross-sectional shape data of a three-dimensional model on the surface of a light hardening resin to form a hardening layer, and layer the hardening layer to shape the three-dimensional model, includes: a light source configured to irradiate light on the surface of the light hardening resin; a spatial light modulating unit configured to subject light irradiated from the light source to spatial modulation, and irradiate the light on an irradiation area which is an area
where the hardening layer is formed; and a control unit configured to divide the irradiation area into multiple sections, and controls the spatial light modulating unit to subject the light from the light source to spatial modulation to irradiate the light on the irradiation area by multiple number of times for each of the sections.

With an optical shaping method according to an embodiment of the present invention, an optical shaping method for an optical shaping apparatus configured to irradiate light according to the cross-sectional shape data of a three-dimensional model on the surface of a light hardening resin to form a hardening layer, and layer the hardening layer to shape the three-dimensional model, wherein the optical shaping apparatus includes a light source configured to irradiate light on the surface of the light hardening resin, and a spatial light modulating unit configured to subject light irradiated from the light source to spatial modulation, and irradiate the light on an irradiation area which is an area where the hardening layer is formed, includes a step of: dividing the irradiation area into multiple sections, and controlling the spatial light modulating unit to subject the light from the light source to spatial modulation to irradiate the light on the irradiation area by multiple number of times for each of the sections.

According to the above configurations, the optical shaping apparatus includes a light source configured to irradiate light on the surface of the light hardening resin, and a spatial light modulating unit configured to subject light irradiated from the light source to spatial modulation, and irradiate the light on an irradiation area which is an area where the hardening layer is formed. Subsequently, the irradiation area is divided into multiple sections, and irradiation of light to the irradiation area according to the spatial light modulating unit subjecting the light from the light source to spatial modulation is performed by multiple number of times for each of the sections.

Thus, according to the above configurations, high-precision optical shaping can be performed.

### BRIEF DESCRIPTION OF THE DRAWINGS

Fig. 1 is a diagram for describing one-shot exposure according to an SLM projecting method;
Fig. 2 is a block diagram illustrating a configuration example of an optical shaping apparatus to which an embodiment of the present invention has been applied;
Fig. 3 is a diagram illustrating a work area wherein an irradiation area is divided into multiple sections for each unit area in a zigzag form;
Fig. 4 is a flowchart for describing processing for performing optical shaping according to an optical shaping apparatus 11;
Fig. 5 is a diagram illustrating a work area wherein an irradiation area is divided into multiple sections in a tree-ring form; and
Fig. 6 is a block diagram illustrating a configuration example of a computer.

### DESCRIPTION OF THE PREFERRED EMBODIMENTS

Before describing an embodiment of the present invention, the correspondence between the features of the claims and the specific elements disclosed in an embodiment of the present invention is discussed below. This description is intended to assure that an embodiment supporting the claimed invention is described in this specification. Thus, even if an element in the following embodiments is not described as relating to a certain feature of the present invention, that does not necessarily mean that the element does not relate to that feature of the claims. Conversely, even if an element is described herein as relating to a certain feature of the claims, that does not necessarily mean that the element does not relate to the other features of the claims.

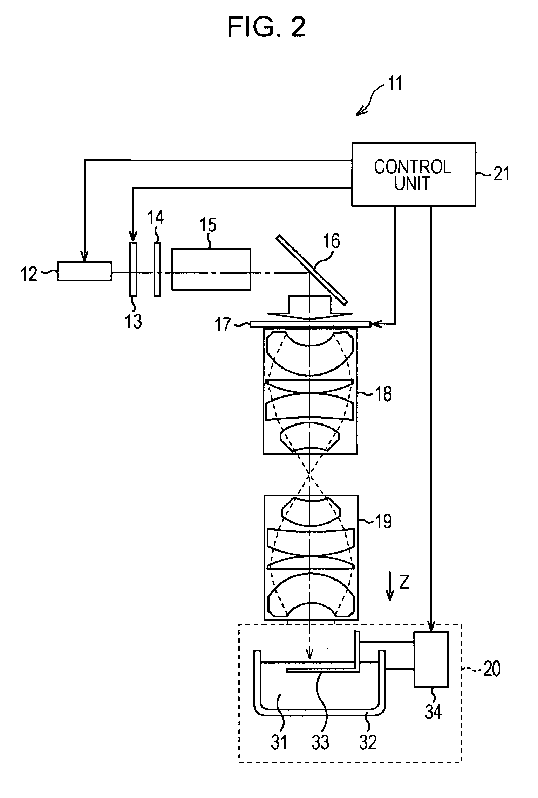

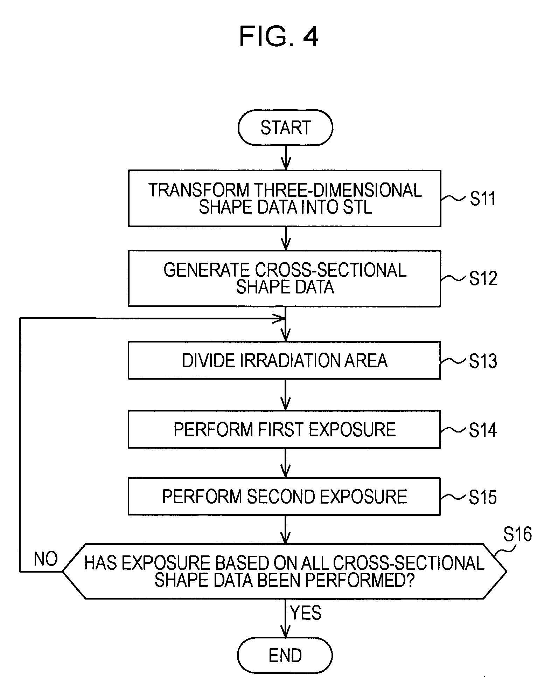

An optical shaping apparatus according to an embodiment of the present invention is an optical shaping apparatus configured to irradiate light according to the cross-sectional shape data of a three-dimensional model on the surface of a light hardening resin to form a hardening layer, and layer the hardening layer to shape the three-dimensional model, including: a light source configured to irradiate light on the surface of the light hardening resin (e.g., light source 12 in Fig. 2); a spatial light modulating unit configured to subject light irradiated from the light source to spatial modulation, and irradiate the light on an irradiation area which is an area where the hardening layer is formed (e.g., spatial light modulator 17 in Fig. 2); and a control unit configured to divide the irradiation area into multiple sections, and controls the spatial light modulating unit to subject the light from the light source to spatial modulation to irradiate the light on the irradiation area by multiple number of times for each of the sections (e.g., control unit 21 in Fig. 2 for executing processing in steps S14 and S15 in Fig. 4).

An optical shaping method according to an embodiment of the present invention is an optical shaping method for an optical shaping apparatus configured to irradiate light according to the cross-sectional shape data of a three-dimensional model on the surface of a light hardening resin to form a hardening layer, and layer the hardening layer to shape the three-dimensional model, wherein the optical shaping apparatus includes a light source configured to irradiate light on the surface of the light hardening resin, and a spatial light modulating unit configured to subject light irradiated from the light source to spatial modulation, and irradiate the light on an irradiation area which is an area where the hardening layer is formed, including a step of: dividing the irradiation area into multiple sections, and controlling the spatial light modulating unit to subject the light from the light source to spatial modulation to irradiate the light on the irradiation area by multiple number of times for each of the sections (e.g., steps S14 and S15 in Fig. 4).

Description will be made below in detail regarding specific embodiments to which the present invention has been applied, with reference to the drawings.

Fig. 2 is a block diagram illustrating a configuration example of an optical shaping apparatus to which an embodiment of the present invention has been applied. In Fig. 2, an optical shaping apparatus 11 is configured of a light source 12, shutter 13, polarizing plate 14, beam integrator 15, mirror 16, spatial light modulator 17, condensing lens 18, objective lens 19, work unit 20, and control unit 21.

A light source where high-output blue LEDs are disposed in an array fashion can be employed as the light source 12. The light source 12 irradiates light for exposing an ultraviolet hardening layer 31 of the work unit 20 to form a hardening layer. Note that a coherent laser light source does not have to be employed as the light source 12.

The shutter 13 passes or shields light irradiated from the light source 12, and controls on/off of exposure of the ultraviolet hardening resin 31 according to the light from the light source 12, in accordance with control of the control unit 21.

The polarizing plate 14 converts the light passed through the shutter 13 into predetermined polarization light. That is to say, the polarizing plate 14 polarizes the light from the light source 12 such that the spatial light modulator 17 made up of a transmissive liquid crystal panel can subject the light from the light source 12 to spatial modulation.

The beam integrator 15 makes uniform the light polarized by the polarizing plate 14. A common type is employed as the beam integrator 15, such as a fly eye type made up of multiple lens elements being arrayed, a light rod type having a configuration wherein the inside of a rod lens in a columnar shape such as a quadratic prism or the like is total-reflected, or the like.

The mirror 16 reflects the light uniformed by the beam integrator 15 toward the spatial light modulator 17. The spatial light modulator 17 is made up of, for example, a transmissive liquid crystal panel, and subjects a part of the light reflected by the mirror 16 to spatial modulation in accordance with control of the control unit 21 such that the light reflected by the mirror 16 exposes an irradiation area corresponding to the cross-sectional shape data on the ultraviolet hardening resin 31.

That is to say, a driving signal for driving each pixel of the liquid crystal panel is supplied, according to the cross-sectional shape data, to the spatial light modulator 17 from the control unit 21, and the spatial light modulator 17 changes the array of liquid crystal molecules of the pixel corresponding to an irradiation area based on the driving signal thereof to change the polarization direction where light transmits. Thus, the spatial light modulator 17 subjects the light passed through the liquid crystal panel to spatial modulation, and projects the light having the shape corresponding to the cross-sectional shape data on the ultraviolet hardening resin 31 with the areas corresponding to one pixel of the liquid crystal panel as a unit area for performing exposure.

The condensing lens 18 is configured of a lens group for correcting distortion at the time of the light subjected to spatial modulation by the spatial light modulator 17 passing through the objective lens 19, and condenses the light subjected to spatial modulation by the spatial light modulator 17 on the anterior focal point of the objective lens 19. For example, each of lens groups is configured such that the condensing lens 18 and objective lens 19 make up a symmetric optical system, whereby distortion can be reduced.

The objective lens 19 is configured of a lens group made up of a single or multiple lenses, and image-forms the light subjected to spatial modulation by the spatial light modulator 17 on the surface of the ultraviolet hardening resin 31.

Now, the objective lens 19 is configured so as to condense the optical beam from an unshown beam scanning optical system at the time of one-shot exposure according to the light from the light source 12, and beam scanning exposure according to the optical beam from the beam scanning optical system being performed, such that the optical beam is scanned on the surface of the ultraviolet hardening resin 31 at equal speed, i.e., the optical beam is scanned on the surface of the ultraviolet hardening resin 31 at uniform scanning speed.

For example, a so-called fθ lens is employed as the objective lens 19, which has an image height Y proportional to an incident angle θ, and a relation (Y = f × θ) wherein a product between a focal length f and the incident angle θ is the image height Y. In other words, the fθ lens is a lens designed such that the scanning speed of an optical beam to be scanned is constant regardless of an incident position to the lens. Such an objective lens 19 is employed, whereby occurrence of difference between a design shape and an actual hardening layer shape due to the irregularities of scanning speed can be prevented, and accordingly, high-definition shaping is realized. Note that a lens having a normal condensing function may be employed as the objective lens 19 instead of the fθ lens.

The work unit 20 is configured of a housing container 32, stage 33, and driving unit 34. The housing container 32 houses the liquid ultraviolet hardening resin 31.

The stage 33 is dipped in the liquid ultraviolet hardening resin 31 of the housing container 32, and is movable at least in the vertical direction (direction of an arrow Z in Fig. 2) orthogonal to liquid level which is the surface of the ultraviolet hardening resin 31.

The driving unit 34 drives the housing container 32 and stage 33 in accordance with control of the control unit 21. For example, in response to a situation wherein the ultraviolet hardening resin 31 is exposed according to the cross-sectional shape data of a three-dimensional model, and one hardening layer of the three-dimensional model is formed, the driving unit 34 drives the stage 33 downward in the vertical direction step by step. Also, the driving unit 34 drives the housing container 32 in the vertical direction such that the surface of the ultraviolet hardening resin 31 is identical to the rear-side focal position of the objective lens 19.

The control unit 21 controls the light source 12 to turn on/off irradiation of light from the light source 12, controls the shutter 13 to turn on/off exposure of the ultraviolet hardening resin 31, and controls the driving unit 34 to drive the housing container 32 and stage 33.

Also, the control unit 21 supplies a driving signal for driving each pixel of the spatial light modulator 17 to the spatial light modulator 17 such that the pixel of the spatial light modulator 17 corresponding to an irradiation area transmits light, based on the cross-sectional shape data of the three-dimensional model. Here, the control unit 21 divides the irradiation area into multiple sections, and drives the pixels of the spatial light modulator 17 for each of the sections thereof. That is to say, the control unit 21 controls the spatial light modulator 17 such that irradiation of light to the ultraviolet hardening resin 31 through the spatial light modulator 17 is performed by multiple stages (number of times). For example, the control unit 21 divides the irradiation area into two sections of first and second sections, and performs exposure by two stages of first-step exposure and second-step exposure.

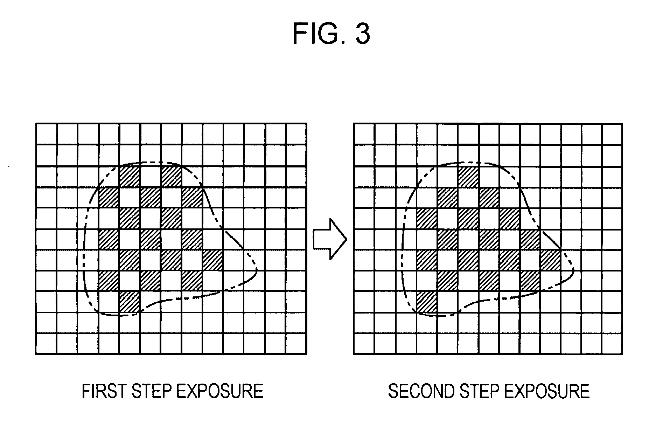

Fig. 3 illustrates a work area where the irradiation area is divided into two sections in a zigzag form for each unit area (the surface of the ultraviolet hardening resin 31 which can be exposed collectively by the light through the spatial light modulator 17).

Unit areas subjected to hatching in the work area of the first-step exposure are included in the first section where light is irradiated at the first-step exposure, and unit areas subjected to hatching in the work area of the second-step exposure are included in the second section
where light is irradiated at the second-step exposure. As shown in Fig. 3, the irradiation area inside the profile line (two-dot broken line) of the three-dimensional model based on the cross-sectional shape data is divided into the unit areas in the first section and the unit areas in the second section in a zigzag form.

That is to say, as shown in Fig. 3, with the first section, a unit pixel where light is irradiated, and a unit pixel where light is not irradiated are disposed alternately for each unit area in the vertical and horizontal directions, and unit pixels where light is irradiated are disposed in a so-called zigzag form. Similarly, with the second section as well, in the same way as the first section, unit pixels where light is irradiated are disposed in a zigzag form, and accordingly, the unit areas in the first section and the unit areas in the second section complement to each other, thereby infilling the irradiation area.

Thus, exposure is performed in two steps, and accordingly, when the surface of the ultraviolet hardening resin 31 corresponding to the first section is exposed, and each unit area is hardened, the ultraviolet hardening resin 31 of the unit areas in the second section adjacent to the unit areas in the first section is liquid, so in response to contraction of the ultraviolet hardening resin 31 in the first section, the liquid ultraviolet hardening resin 31 flows into the unit areas in the second section from the surroundings thereof. That is to say, overall distortion and deformation at the time of each of the unit areas of the ultraviolet hardening resin 31 in the first section being hardened and contracted is absorbed by the liquid ultraviolet hardening resin 31 surrounding each of the unit areas of the ultraviolet hardening resin 31 in the first section.

Subsequently, when the ultraviolet hardening resin 31 corresponding to the second section is exposed, and each of the unit areas is hardened and contracted, the unit areas in the first section adjacent to the unit areas in the second section have already been hardened, so overall distortion and deformation does not occur.

That is to say, with the exposure according the SLM projecting method according to the related art (Fig. 1), all of the unit areas in an exposure area are contracted simultaneously, so are contracted toward the center of the irradiation area as a whole, and accordingly, distortion or modification occurs on a hardening layer.

On the other hand, as described above, exposure is performed in two steps, and thus, the unit areas in the first section and the unit areas in the second section are hardened sequentially, and accordingly, the irradiation area is not entirely contracted, and neither distortion nor deformation occurs on a hardening layer. Accordingly, as compared to the case wherein the irradiation area is exposed at a time in a traditional manner, the dimensional precision at the entirety within the face of a hardening layer can be improved, and consequently, a three-dimensional model to be formed by hardening layers being layered can be formed with higher precision.

Next, Fig. 4 is a flowchart for describing processing for performing optical shaping according to the optical shaping apparatus 11 in Fig. 2. For example, upon three-dimensional shape data of a three-dimensional model created by CAD being input to the optical shaping apparatus 11, and operations for starting optical shaping being performed, in step S11 the control unit 21 executes a program for transforming the three-dimensional shape data of the three-dimensional model created by CAD into STL to transform the three-dimensional shape data of the three-dimensional model into STL.

After the processing in step S11, the processing proceeds to step S12, where the control unit 21 generates the cross-sectional shape data of the three-dimensional model from the three-dimensional shape data transformed into STL, and the processing proceeds to step S13. Also, when generating the cross-sectional shape data of the three-dimensional model, for example, the attitude and orientation of the three-dimensional model are determined, and data for shaping a member for preventing the three-dimensional model from falling during shaping, and so forth are generated.

In step S13, the control unit 21 divides the irradiation area corresponding to the first layer data of the cross-sectional shape data generated in step S12 into two sections of first and second sections (i.e., as described with reference to Fig. 3, two sections where the unit areas of the irradiation area are divided in a zigzag form), and the processing proceeds to step S14.

In step S14, the control unit 21 supplies to the spatial light modulator 17 a driving signal for driving each pixel of the spatial light modulator 17 so as to irradiate light on the unit areas in the first section, and the spatial light modulator 17 drives each pixel such that the light irradiated from the light source 12 passes through the pixels corresponding to the unit areas in the first section. Subsequently, the control unit 21 opens the shutter 13 for a predetermined exposure period to expose the unit areas in the first section of the unit areas on the surface of the ultraviolet hardening resin 31.

After the processing in step S14, the processing proceeds to step S15, where the control unit 21 supplies to the spatial light modulator 17 a driving signal for driving each pixel of the spatial light modulator 17 so as to irradiate light on the unit areas in the second section, and the spatial light modulator 17 drives each pixel such that the light irradiated from the light source 12 passes through the pixels corresponding to the unit areas in the second section. Subsequently, the control unit 21 opens the shutter 13 for a predetermined exposure period to expose the unit areas in the second section of the unit areas on the surface of the ultraviolet hardening resin 31.

After the processing in step S15, the processing proceeds to step S16, where the control unit 21 determines whether or not exposure based on all of the cross-sectional shape data generated in step S12 has been performed.

In a case wherein in step S16 the control unit 21 has determined that exposure based on all of the cross-sectional shape data has not been performed, the processing returns to step S13, where the same processing is repeated with the cross-sectional shape data of the next layer of the layer wherein exposure is performed in the last steps S13 through S15 as a processing target.

On the other hand, in a case wherein in step S16 the control unit 21 has determined that exposure based on all of the cross-sectional shape data has been performed, the three-dimensional model is completed, and the processing is ended.

As described above, with the optical shaping apparatus 11, occurrence of distortion or deformation on a hardening layer can be prevented by subjecting each section to exposure in two steps, and accordingly, a three-dimensional model can be formed with higher precision.

Note that as shown in Fig. 3, an irradiation area may be divided with a dividing method other than a dividing method for dividing an irradiation area in a zigzag form, and also, exposure may be performed in two or more steps.

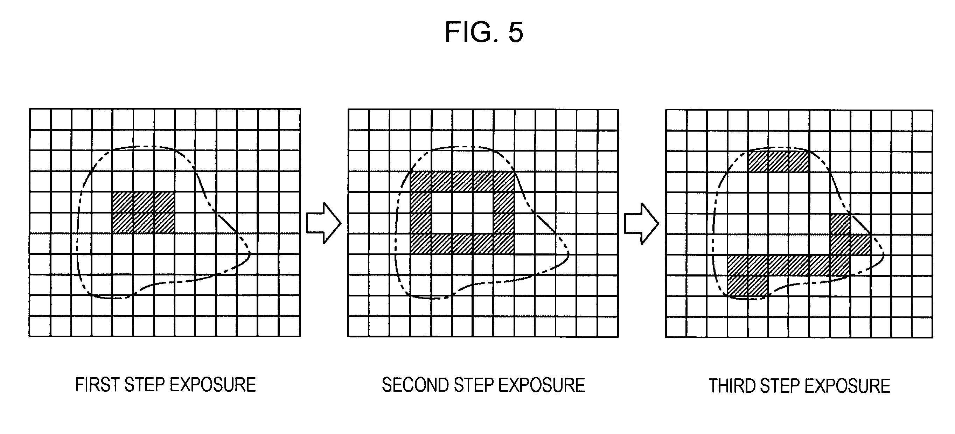

For example, Fig. 5 illustrates a work area wherein an irradiation area is divided into three sections in a tree-ring form with around the center of the irradiation area as the center, and exposure is performed in three steps.

As shown in the work area of the first-step exposure, of the unit areas serving as the irradiation area, the unit areas around the center of the irradiation area are taken as the first section, and as shown in the work area of the second-step exposure, the unit areas surrounding the circumference of the first section are taken as the second section. Also, as shown in the work area of the third-step exposure, the unit areas surrounding the circumference of the second section within a two-dot broken line which is a profile line are taken as the third section.

Thus, the irradiation area is divided in a tree-ring form, and exposure is performed in the three steps in order from the first section through third section, and thus, at the time of the first section being exposed and contracted, the ultraviolet hardening resin 31 of the second section adjacent to the first section is liquid, and accordingly, overall deformation due to hardening and contracting thereof can be absorbed. Also, at the time of the second section being exposed and contracted, the ultraviolet hardening resin 31 of the third section adjacent to the second section is liquid, and at the time of the third section being exposed and contracted, the ultraviolet hardening resin 31 surrounding the third section adjacent is liquid, and accordingly, overall deformation due to hardening and contracting of each section can be absorbed.

It goes without saying that the number of sections obtained by dividing the irradiation area in a tree-ring form becomes three or more depending on the size of the irradiation area, and in this case, exposure is performed in three or more steps according to the number of sections. Also, each section may be exposed in a stepwise manner from the outer side toward the inner side other than a case wherein each section is exposed in a stepwise manner from the inner side toward the outer side.

Thus, an irradiation area is divided into multiple sections in a tree-ring form, and exposure is performed in order in multiple steps, whereby a three-dimensional model can be formed with higher precision without causing distortion and deformation on a hardening layer.

Also, the form of sections obtained by dividing an irradiation area may be another format other than zigzag and tree-ring forms. Specifically, it is desirable to determine sections such that when light is irradiated on a certain unit area, light is not irradiated on at least one unit area of the unit areas adjacent to the unit area thereof, and the liquid ultraviolet hardening resin 31 flows from the adjacent unit areas where light is not irradiated. In other words, it is desirable to divide sections so as to prevent occurrence of distortion and deformation by the ultraviolet hardening resin 31 flowing into.

Also, for example, when dividing an irradiation area into multiple sections, sections may be divided for each multiple unit areas instead of sections being divided for each unit area as shown in Fig. 3. For example, an irradiation area may be divided in a zigzag form with four unit areas which are adjacent to each other in a two-by-two contingency table form as one unit.

Further, with optical shaping according to a tiling method wherein the cross-sectional shape of a three-dimensional model is divided into multiple work areas disposed in a tile form, the multiple work areas are exposed in order thereby forming a single hardening layer, exposure of the irradiation area of each work area may be performed by dividing each work area into multiple sections.

A microchip, connector, microcapsule, or the like, or a prototype of various types of fine component can be shaped by employing such an optical shaping apparatus 11.

Note that in addition to a transmissive liquid crystal panel, a digital micromirror device (DMD) made up of multiple minute reflection mirrors being arrayed wherein the tilt angle is changed according to an input signal, reflective liquid crystal on silicon (LCOS), or the like may be employed as the spatial light modulator 17. In the case of employing a digital micromirror device, each micromirror corresponds to one unit area, so the polarizing plate 14 does not have to be provided.

Also, the present invention may be applied to not only the optical shaping apparatus 11 for performing optical shaping by a free liquid level method which is a technique wherein light subjected to spatial modulation by the spatial light modulator 17 is irradiated from above the ultraviolet hardening resin 31, but also an optical shaping apparatus for performing optical shaping by a fluid surface regulation method which is a technique wherein light subjected to spatial modulation by the spatial light modulator 17 is irradiated on the interface between the ultraviolet hardening resin 31 and housing container 32.

For example, the bottom face of the housing container 32 is configured of a material for transmitting light, such as glass or the like, and light subjected to spatial modulation by the spatial light modulator 17 is irradiated on the interface between the glass thereof and ultraviolet hardening resin 31 from the lower portion of the ultraviolet hardening resin 31. That is to say, the surface of the ultraviolet hardening resin 31 where light corresponding to the cross-sectional, shape data of a three-dimensional model is irradiated includes the interface between the glass and ultraviolet hardening resin 31.

With the fluid surface regulation method, processing is repeated wherein the stage 33 is disposed such that the distance between the housing container 32 and stage 33 is equal to the thickness of one layer worth of hardening layers, and the stage 33 is driven upward in the vertical direction such that the distance between the housing container 32 and stage 33 is equal to the thickness of one layer worth of hardening layers step by step in response to one hardening layer of a three-dimensional model being formed according to light irradiated on the ultraviolet hardening resin 31 through the glass of the bottom face of the housing container 32, thereby forming the three-dimensional model.

Thus, the surface (interface) of the ultraviolet hardening resin 31 where light is irradiated is regulated by glass, thereby shaping the thickness of one layer worth of hardening layers accurately, so layering precision can be improved, and thus, a three-dimensional model can be formed with high precision.

Also, the above-mentioned series of processing performed by the control unit 21 can be executed by not only hardware but also software. In the case of executing the series of processing by software, a program making up the software is installed from a program recording medium to a computer embedded in dedicated hardware, or a general-purpose personal computer or the like capable of executing various types of function by various types of program being installed.

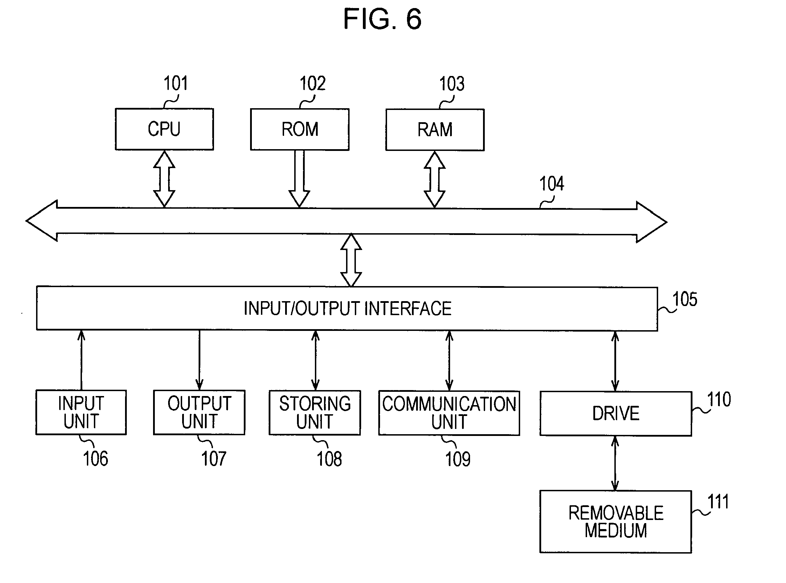

Fig. 6 is a block diagram illustrating a configuration example of a computer wherein the above-mentioned series of processing is executed by the program. With the computer, a CPU (Central Processing Unit) 101, ROM (Read Only Memory) 102, and RAM (Random Access Memory) 103 are connected mutually by a bus 104.

An input/output interface 105 is further connected to the bus 104. The input/output interface 105 is connected with an input unit 106 made up of a keyboard, mouse, microphone and so forth, an output unit 107 made up of a display, speaker, and so forth, a storing unit 108 made up of a hard disk, nonvolatile memory, and so forth, a communication unit 109 made up of a network interface and so forth, and a drive 110 for driving a removable medium 111 such as a magnetic disk, optical disc, magneto-optical disk, semiconductor memory, or the like.

With the computer thus configured, the above-mentioned series of processing is performed, for example, by the CPU 101 loading a program stored in the storing unit 108 in the RAM 103 through the input/output interface 105 and bus 104 and executing this.

The program executed by the computer (CPU 101) is provided by being recorded in the removable medium 111 which is a package medium made up of a magnetic disk (including a flexible disk), optical disc (CD-ROM (Compact Disc-Read Only Memory), DVD (Digital Versatile Disc), etc.), magneto-optical disk, semiconductor memory, or the like, or provided through a cable or wireless transmission medium such as a local area network, Internet, or digital satellite broadcasting.

Subsequently, the removable medium 111 is mounted on the drive 110, whereby the program can be installed in the storing unit 108 through the input/output interface 105. Also, the program can be received at the communication unit 109 through a cable or wireless transmission medium, and installed in the storing unit 108. Alternatively, the program can be installed in the ROM 102 or storing unit 108 beforehand.

Note that the program executed by the computer may be a program wherein processing is performed in time sequence along the order described in the present Specification, or may be a program wherein processing is performed in parallel or at appropriate timing such that calling is performed. Alternatively, the program may be processed by one CPU, or may be processed by multiple CPUs in a distributed manner.

Also, embodiments of the present invention are not restricted to the above-mentioned embodiment, and various modifications may be made without departing from the essence and scope of the present invention.

It should be understood by those skilled in the art that various modifications, combinations, sub-combinations and alterations may occur depending on design requirements and other factors insofar as they are within the scope of the appended claims or the equivalents thereof.

## Claims

1. An optical shaping apparatus configured to irradiate light according to the cross-sectional shape data of a three-dimensional model on the surface of a light hardening resin to form a hardening layer, and layer said hardening layer to shape said three-dimensional model, comprising:
a light source configured to irradiate light on the surface of said light hardening resin;
spatial light modulating means configured to subject light irradiated from said light source to spatial modulation, and irradiate said light on an irradiation area which is an area where said hardening layer is formed; and
control means configured to divide said irradiation area into a plurality of sections, and controls said spatial light modulating means to subject the light from said light source to spatial modulation to irradiate said light on said irradiation area by a plurality of number of times for each of said sections.

2. The optical shaping apparatus according to Claim 1, wherein said control means divide said irradiation area into two sections in a zigzag form, and control said spatial light modulation means to perform irradiation of light to said irradiation area twice.

3. The optical shaping apparatus according to Claim 1, wherein said control means divide said irradiation area into a plurality of sections in a tree-ring form with the general center of said irradiation area as the center, and control said spatial light modulation means to perform irradiation of light to said irradiation area from the inner section toward the outer section by a plurality of number of times.

4. An optical shaping method for an optical shaping apparatus configured to irradiate light according to the cross-sectional shape data of a three-dimensional model on the surface of a light hardening resin to form a hardening layer, and layer said hardening layer to shape said three-dimensional model, wherein said optical shaping apparatus includes
a light source configured to irradiate light on the surface of said light hardening resin, and
spatial light modulating means configured to subject light irradiated from said light source to spatial modulation, and irradiate said light on an irradiation area which is an area where said hardening layer is formed, comprising a step of:
dividing said irradiation area into a plurality of sections, and controlling said spatial light modulating means to subject the light from said light source to spatial modulation to irradiate said light on said irradiation area by a plurality of number of times for each of said sections.

5. An optical shaping apparatus configured to irradiate light according to the cross-sectional shape data of a three-dimensional model on the surface of a light hardening resin to form a hardening layer, and layer said hardening layer to shape said three-dimensional model, comprising:
a light source configured to irradiate light on the surface of said light hardening resin;
a spatial light modulating unit configured to subject light irradiated from said light source to spatial modulation, and irradiate said light on an irradiation area which is an area where said hardening layer is formed; and
a control unit configured to divide said irradiation area into a plurality of sections, and controls said spatial light modulating unit to subject the light from said light source to spatial modulation to irradiate said light on said irradiation area by a plurality of number of times for each of said sections.

6. An optical shaping method for an optical shaping apparatus configured to irradiate light according to the cross-sectional shape data of a three-dimensional model on the surface of a light hardening resin to form a hardening layer, and layer said hardening layer to shape said three-dimensional model, wherein said optical shaping apparatus includes
a light source configured to irradiate light on the surface of said light hardening resin, and
a spatial light modulating unit configured to subject light irradiated from said light source to spatial modulation, and irradiate said light on an irradiation area which is an area where said hardening layer is formed, comprising a step of:
dividing said irradiation area into a plurality of sections, and controlling said spatial light modulating unit to subject the light from said light source to spatial modulation to irradiate said light on said irradiation area by a plurality of number of times for each of said sections.
